Europäisches Patentamt

European Patent Office

Office européen des brevets

(19)

(11) Veröffentlichungsnummer: **0 133 605**
**B1**

(12) **EUROPÄISCHE PATENTSCHRIFT**

(45) Veröffentlichungstag der Patentschrift:
01.04.87

(21) Anmeldenummer: **84810274.5**

(22) Anmeldetag: **06.06.84**

(51) Int. Cl.⁴: **F 16 B 12/02,** F 16 B 12/50,
A 47 B 43/00

(54) **Kasten mit Eckverbindung.**

(30) Priorität: **05.07.83 CH 3686/83**

(43) Veröffentlichungstag der Anmeldung:
**27.02.85 Patentblatt 85/9**

(45) Bekanntmachung des Hinweises auf die Patenterteilung:
**01.04.87 Patentblatt 87/14**

(84) Benannte Vertragsstaaten:
**AT BE DE FR GB IT LU NL SE**

(56) Entgegenhaltungen:
**FR - A - 347 296**
**FR - A - 1 508 330**
**FR - A - 1 515 969**
**FR - A - 2 049 467**
**GB - A - 589 299**

(73) Patentinhaber: **W. SCHNEIDER & CO. AG**
**Metallwarenfabrik, Alte Dorfstrasse 4, CH-8135 Langnau**
**a/A (CH)**

(72) Erfinder: **Schneider, Walter, Wildenbühlstr. 54,**
**CH-8135 Langnau a/A (CH)**

(74) Vertreter: **Bosshard, Ernst, Schulhausstrasse 12,**
**CH-8002 Zürich (CH)**

**Beschreibung**

Die Erfindung bezieht sich auf einen Kasten mit Eckverbindung, wobei der Boden und die Seitenwände aus einem einzigen Blechzuschnitt bestehen.

Konventionelle Blechkästen werden in der Weise hergestellt, dass die Seitenwände und allenfalls auch der Boden durch Schweissnähte oder Punktschweiss-Stellen verbunden werden. Die präzise Zusammenfügung erfordert einen gewissen Arbeitsaufwand und zudem fallen an den Schweissstellen vielfach Verputzarbeiten an.

Es sind zwar bereits Eckverbindungsschienen bekannt, welche zwei im rechten Winkel zueinander verlaufende Nuten enthalten, in welche ebene Blechplatten einschiebbar sind. Zur Lagesicherung zwischen Eckverbindungsschiene und Blechplatten sind indessen rahmenartige Querstreben od. dgl. erforderlich.

Aus der FR-A-347 296 ist eine Eckverbindung bekannt, bei der die Seitenwände eines Kochherdes durch eine zweiteilige Eckverbindungsschiene im rechten Winkel gehalten werden. Die Enden der Seitenwände sind um 90° abgebogen und werden von einem auf der Innenseite befindlichen Winkelstück der Eckverbindungsschiene hintergriffen und durch Schrauben an einem äussern Schienenteil festgeklemmt.

Die mit der Erfindung zu lösende Aufgabe besteht in der Schaffung eines Kastens, insbesondere für Badezimmer, bei dem eine Versteifung der Seitenwände und eine Verbesserung der Eckverbindung des Kastens erfolgen soll.

Diese Aufgabe wird durch die im Kennzeichen des Patentanspruches 1 genannten Merkmale gelöst.

Durch die U-förmige Rinne werden die Seitenwände versteift und die Aufnahme-Nuten der Eckverbindungsstücke für die Seitenwände werden durch den Kopfteil überdeckt, so dass sie von der offenen Kastenseite her nicht sichtbar sind.

In der Zeichnung sind Ausführungsbeispiele des Erfindungsgegenstandes dargestellt. Es zeigen:

Fig. 1 eine perspektivische Ansicht eines Eckbereiches eines Kastens,

Fig. 2 eine Draufsicht auf einen einzigen Blechzuschnitt, aus welchem Seitenwände und Boden geformt werden,

Fig. 3 eine Draufsicht auf eine Eckverbindung vor dem Einsetzen der Verbindungsschiene,

Fig. 4 einen Schnitt durch die Eckverbindung samt einer zweiteiligen Eckverbindungsschiene,

Fig. 5 einen Querschnitt durch eine Ausführungsvariante der Eckverbindung,

Fig. 6 eine weitere Ausführungsvariante der Eckverbindung,

Fig. 7 einen Querschnitt durch eine zweiteilige Eckverbindungsschiene samt eingesetzten Seitenwänden,

Fig. 8 eine perspektivische Teilansicht einer Eckverbindung, mit gerundetem obern Randbereich,

Fig. 9 eine Ansicht einer aus einem einzigen Stück bestehenden Eckverbindungsschiene,

Fig. 10 einen Schnitt nach der Linie X-X in Fig. 9.

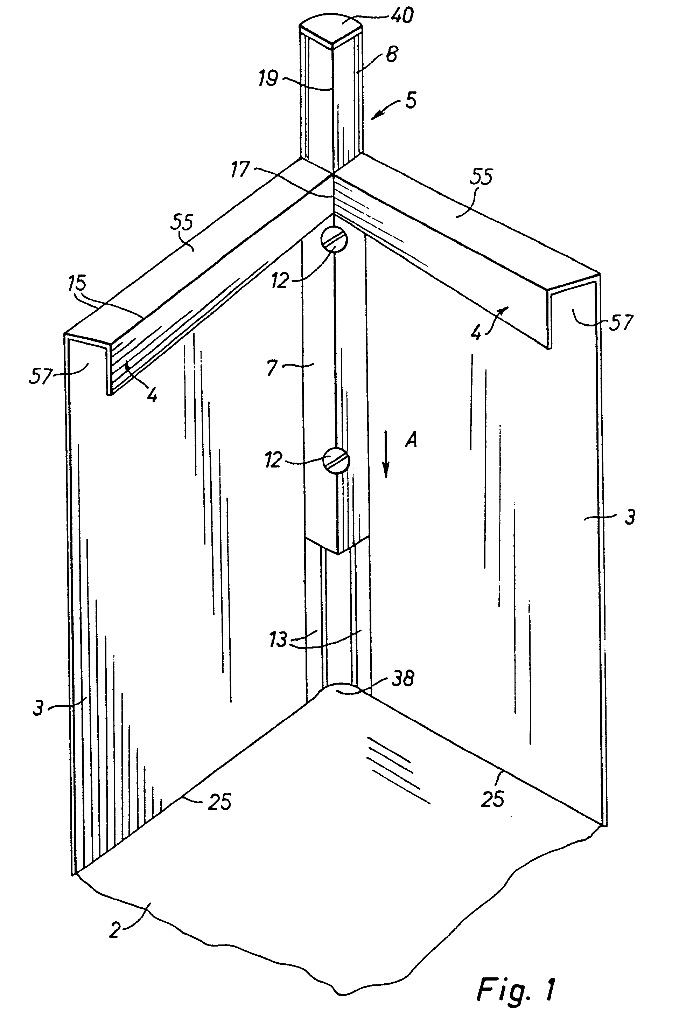

Der Kasten gemäss Fig. 1 enthält vier zueinander rechtwinklig verlaufende Seitenwände 3 und einen Boden 2 oder Rückwand. Der Kasten wird üblicherweise später mit einer Tür versehen, insbesondere zur Verwendung als Badezimmer- oder Toilettenschrank. Die Seitenwände 3 werden in nachfolgend beschriebener Weise an den Ecken durch vier Eckverbindungsschienen 5 zusammengehalten.

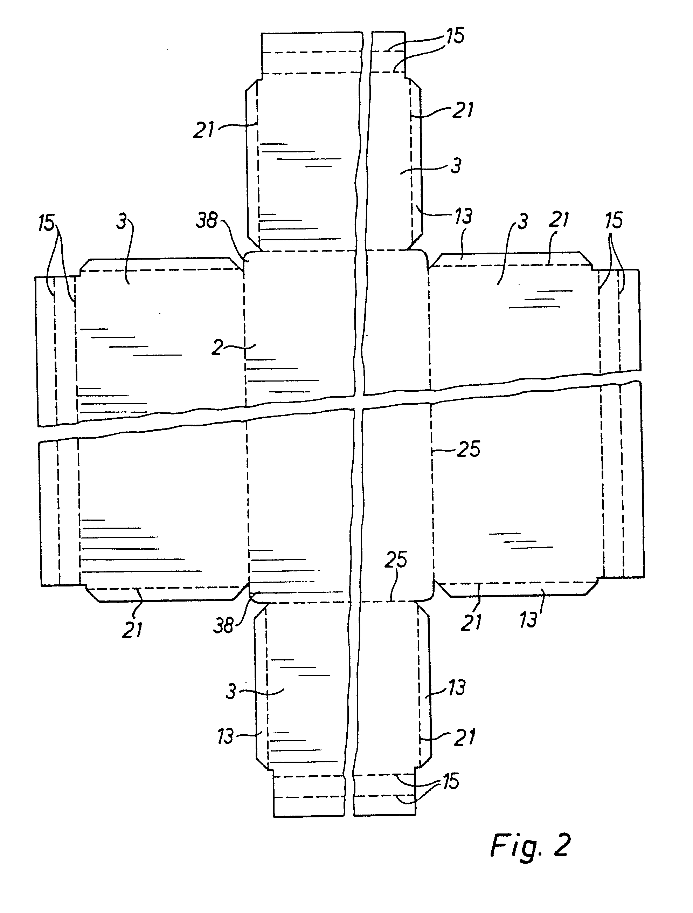

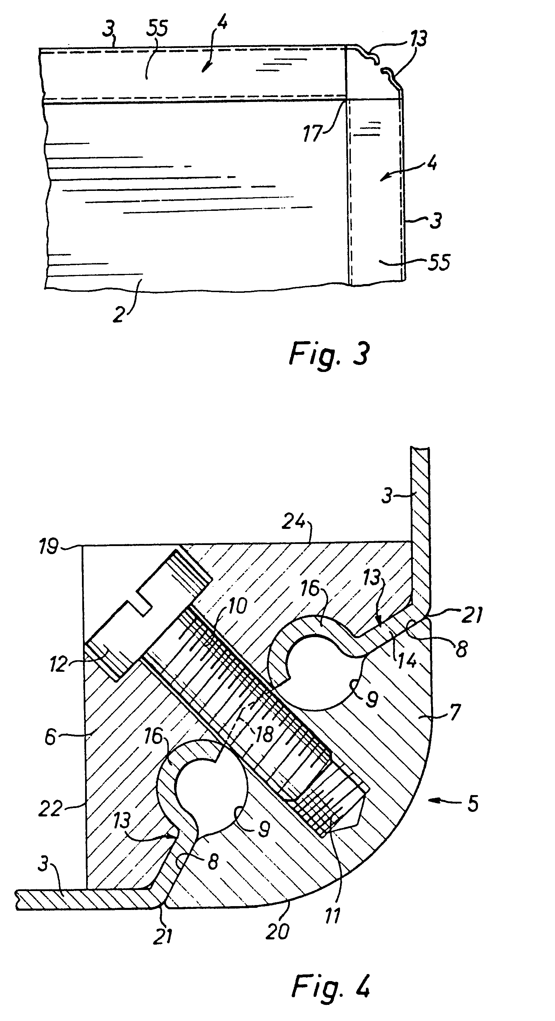

Wie aus Fig. 2 hervorgeht, besteht der Zuschnitt aus einem einzigen Blechstück, aus dem durch Biegeoperationen der Kasten gebildet wird. Die vom Boden 2 abgewandten Enden der Seitenwände 3 sind gemäss Fig. 1 nach der Innenseite U-förmig umgebogen, wobei in Fig. 2 die Biegekanten 15 angedeutet sind. Dadurch wird eine sich gegen die Kasteninnenseite offene Rinne 57 gebildet. Diese U-förmigen Randbereiche 4 stossen an den Ecken mit ihrem innern Rand entlang einer Trennlinie 17 zusammen oder haben voneinander nur einen geringen Abstand. Entlang den zueinander parallelen Rändern der Seitenwände 3, welche rechtwinklig zum Boden 2 verlaufen, befindet sich je eine abgewinkelter Haltelappen 13 oder Randteil. Diese sind dazu bestimmt, in Längsnuten 8 von Eckverbindungsschienen 5 einzugreifen.

Vor dem Aufrichten der Seitenwände 3 werden die Haltelappen aus dem ebenen Seitenwandmaterial herausgeformt. Nach Herstellung der U-förmigen Randbereiche 4 aus dem flachen Blechzuschnitt werden die Seitenwände 3 entlang von Biegekanten 25 aufgerichtet, so dass hernach eine Kastenform mit vier Ecken entsteht, von denen eine derselben in Fig. 1 dargestellt ist. Gemäss Fig. 3 und 4 kann in diese abgekröpften, streifenförmigen Randteile 13 an deren Endbreich zusätzlich noch eine im Querschnitt etwa halbkreisförmige Rundung 16 eingepresst werden.

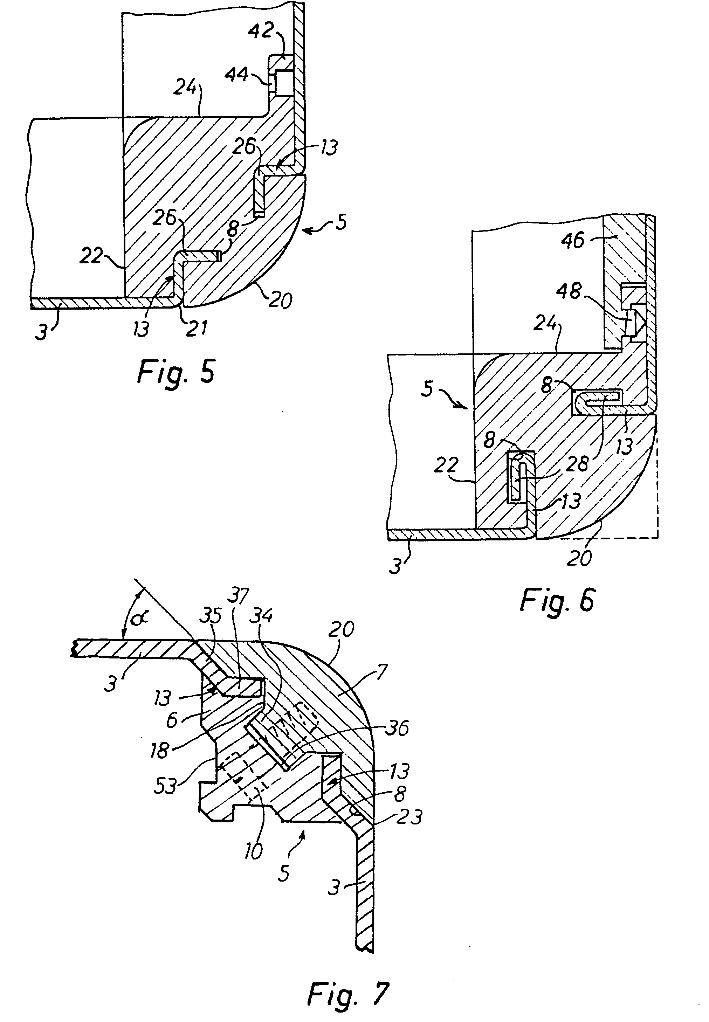

Bei der Ausführungsform gemäss Fig. 5 wird der Randteil 13 bei der Ecke 26 ein zweites Mal rechtwinklig umgebogen, so dass im Querschnitt ein Haltelappen mit Z-förmiger Gestalt entsteht. Die Längsnuten 8 in den Eckverbindungsschienen 5 sind entsprechend winkelförmig ausgebildet, wobei sich der eine Teil parallel zur Fläche 22 und der andere Teil parallel zur Fläche 24 bzw. zur zugehörigen Seitenwand 3 erstreckt. Die Enden der in die Nuten 8 eingreifenden Randteile 13 bilden einen Winkel von 90°.

Eine weitere Ausführungsvariante geht aus Fig. 6 hervor. Hier sind die Enden der Haltelappen 13 umgebördelt, so dass also in diesem umgebördelten Bereich 28 die doppelte Blechdicke vorhanden ist. Die Längsnuten 8 sind hinterschnitten. Der Winkel zwischen den beiden Haltelappen 13 beträgt 90°; er könnte auch etwas grösser oder kleiner als 90° sein.

Die Randteile 13 werden durch je eine in Richtung des Pfeiles A (Fig. 1), also vom U-förmigen Endbereich her, einschiebbare Eckverbindungsschiene 5 untereinander lagesicher verbunden, wobei sich diese Eckverbindungsschienen 5 über die ganze Tiefe der Seitenwände 3 erstrecken.

Die in Fig. 4 dargestellte Verbindungsschiene 5 besteht aus zwei Teilstücken 6 und 7, die entlang einer Trennlinie 18 in Schienenlängsrichtung getrennt sind, welche durch die beiden Längsnuten 8 verläuft. Die Längsnuten 8 haben hier im Querschnitt je die Form einer kreisrunden Bohrung 9, welche sich in Schienenlängsrichtung erstrecken. Die beiden Teilstücke 6 und 7 der Eckverbindungsschiene 5 sind miteinander durch mehrere Schrauben 10, 12 verbunden, die in Schienenlängsrichtung im Abstand voneinander angeordnet sind. Der Schraubenkopf 12 liegt gegen das kasteninnere Teilstück 6 an, während das Gewinde in das kastenäussere Teilstück 7 eingreift, so dass durch Festziehen der Schrauben eine Klemmwirkung auf die Randteile 13 erzielbar ist. Die dem Innern des Kastens zugekehrten Flächen 22, 24 der Eckverbindungsschiene 5 bilden zueinander einen rechten Winkel, während die sich auf der Aussenseite des Kastens befindliche Fläche 20 als Viertelskreisbogen ausgebildet ist, so dass also die Kastenecken gerundet sind.

Bei den Ausführungsformen nach Fig. 5 und 6 besteht die Eckverbindungsschiene 5 aus einem einzigen Stück.

Die Aussenseite der Verbindungsschiene 5 braucht jedoch nicht zwingend gerundet zu sein, sondern könnte auch eckig ausgeführt werden, wie dies in unterbrochenen Linien in Fig. 6 dargestellt ist.

Die Verbindungsschienen 5 können entweder aus Metall, insbesondere Leichtmetall, herstellt werden oder aber sie könnten auch aus Kunststoff bestehen.

Um bei Kästen, welche allenfalls als Badezimmerschrank verwendet werden, Tablare einsetzen zu können, ist es möglich, auf der Innenseite der Verbindungsschienen 5 Absätze oder Halterungselemente vorzusehen, auf welchen Befestigungsorgane oder Tablare direkt aufgesetzt werden können. Ferner können die Verbindungsschienen 5 gemäss Fig. 5 und 6 mit einem seitlichen Ansatz 42 versehen werden, in welchem sich im Abstand voneinander Bohrungen 44 befinden, in die Halter 46, Tablare od. dgl. mit Zapfen 48 eingreifen können.

In Fig. 7 ist eine weitere Ausführungsvariante dargestellt, bei welcher die Eckverbindungsschiene 5 aus zwei in Längsrichtung voneinander trennbaren Teilstücken 6, 7 besteht. Die Seitenwände 3 und der Boden 2 können hier aus getrennten Blechzuschnitten bestehen. Die Randteile 13, welche zum Eingreifen in die Eckverbindungsschiene 5 dienen, enthalten je einen in einem Winkel α von 30° - 50°, vorzugsweise etwa 45° abgebogenen ersten Lappenteil 35 und einen anschliessenden zweiten, zur zugehörigen Seitenwand 3 etwa parallel verlaufenden Lappenteil 37. Am äussern Teil 7 der Eckverbindungsschiene 5 wird je am Eingang der Nut eine spitze Ecke 23 gebildet, derart, dass die Seitenwand 3 bündig in die Rundung 20 übergeht. Dadurch ergibt sich auf der Aussenseite ein praktisch stufenloser Übergang zwischen den Seitenwänden 3 und den Eckverbindungsschienen 5.

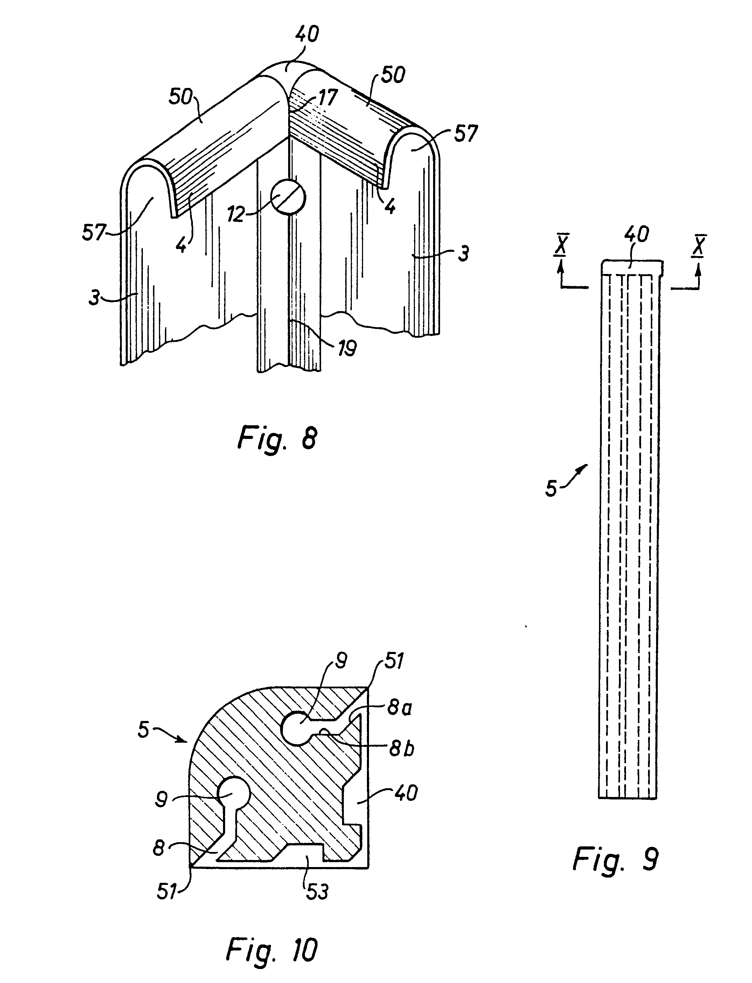

Wie aus Fig. 8 hervorgeht, ist der Endbereich mit einer etwa halbkreisförmigen Rundung 50 versehen, wobei je eine Rinne 57 gebildet wird, die gegen den Boden hin offen ist. Die kasteninnern Ränder dieser Rinne stossen in der Ecke zusammen, so dass sich eine vertikale Trennfuge 17 bildet. Das mit dem äussern Schienenteil 7 starr verbundene Kopfstück 40 ist nach zwei Seiten gerundet, so dass sich ein absatzloser Übergang zwischen den Rundungen 50 ergibt und die Nuten 8 von aussen nicht sichtbar sind. Die zweiteilige Eckverbindungsschiene 5 wird durch Schrauben 12 zusammengehalten. Sie besteht vorzugsweise aus Metall, insbesondere Aluminium.

In den Fig. 9 und 10 ist eine einteilige Eckverbindungsschiene 5 dargestellt, die mit dem Kopfstück 40 ein einziges Stück bildet und vorzugsweise aus Kunststoff hergestellt wird. Die Nuten 8 endigen je in einer Längsbohrung 9 und münden aussen in eine Ecke 51 aus. Der von den beiden abgewinkelten Nutenteilen 8a, 8b eingeschlossene Winkel beträgt 40 - 50°, vorzugsweise etwa 45°. Wie aus den Fig. 1 und 10 hervorgeht, ist das Kopfstück 40 aussen flach, wenn die Rinne 57 eckig – also gemäss Fig. 1 – ausgebildet ist und überdeckt die Nuten 8, so dass sie von der Kastenfrontseite nicht sichtbar sind. Dieses Kopfstück 40 hat eine etwa viertelkreisförmige Gestalt, so dass ein ebener stufenloser Übergang zur Aussenwand 55 der Rinne gebildet wird. Die Nuten 53 dienen allenfalls zur Aufnahme von Stützen für Tablare od. dgl.

## Patentansprüche

1. Kasten mit einem Boden (2) und mehreren Seitenwänden (3), sowie mit Eckverbindungsschienen (5) die sich an den Ecken entlang den Seitenwänden (3) erstrecken und diese in ihrer Lage fixieren, wobei die Seitenwände (3) umgebogene Randteile (13) enthalten, welche in Längsnuten (8) der Eckverbindungsschienen (5) eingreifen und wobei sich die Eckverbindungsschienen (5) auf die Innenseite und Aussenseite des Kastens erstrecken, dadurch gekennzeichnet, dass die Seitenwände (3) an ihrem dem Boden (2) abgewandten Endbereich (4) U-förmig ausgebildet sind, so dass eine sich nach dem Kasteninnern öffende Rinne (57) gebildet ist, wobei die kasteninnenseitigen Endbereiche (14) an den Ecken (17) zusammenstossen oder angenähert zusammenstossen, und die Eckverbindungsschienen (5) einen die Längsnuten (8) überdeckenden Kopfteil (40) aufweisen.

2. Kasten nach Anspruch 1, dadurch gekennzeichnet, dass die Seitenwände (3) je zur Aussenfläche (20) der zugeordneten Eckverbindungsschienen (5) bündig verlaufen.

3. Kasten nach Anspruch 1 oder 2, dadurch gekennzeichnet, dass die Längsnuten (8) der Eckverbindungsschienen (5) hinterschnitten sind oder an ihrem Ende eine gegenüber den Längsnuten (8) grössere Bohrung (9) aufweisen (Fig. 4, 6, 10).

4. Kasten nach einem der Ansprüche 1-3, dadurch gekennzeichnet, dass die Enden der beiden Längsnuten (8) der Eckverbindungsschienen (5) zueinander einen Winkel von mindestens 90° bilden und der parallel zur Seitenwand (3) verlaufende Bereich der Eckverbindungsschienen (5) um Bleckdicke zurückversetzt ist (Fig. 4-6).

5. Kasten nach Anspruch 4, dadurch gekennzeichnet, dass jede der beiden Längsnuten (8) im Querschnitt winkelförmig ausgebildet ist und die Randteile (13) im Querschnitt eine Z-Form haben (Fig. 5, 7).

6. Kasten nach mindestens einem der Ansprüche 1-5, dadurch gekennzeichnet, dass die Eckverbindungsschienen (5) samt Kopfstück (40) einteilig ausgebildet sind und vorzugsweise aus Kunststoff bestehen (Fig. 9, 10).

7. Kasten nach einem der Ansprüche 1 - 5, dadurch gekennzeichnet, dass die Eckverbindungsschienen (5) in Längsrichtung zweiteilig ausgebildet sind, wobei die Trennlinie (18) durch beide Längsnuten (8) verläuft, Schrauben (10, 12) vorhanden sind, mit denen die beiden Schienenteile (6, 7) lösbar miteinander verbindbar sind und die beiden Schienenteile (6, 7) der Eckverbindungsschienen (5) feder- und nutartig ineinandergreifen (Fig. 7).

8. Kasten nach mindestens einem der Ansprüche 1, 6 oder 7, dadurch gekennzeichnet, dass die Randteile (13) je einen ersten um 30° - 50°, vorzugsweise etwa 45° abgebogenen Lappenteil (35) und einen anschliessenden zweiten, abgebogenen, etwa parallel zur zugeordneten Seitenwand (3) verlaufenden Lappenteil (37) aufweisen und die Nuten (8) an den Ecken der Eckverbindungsschienen (5) einmünden, wobei zwischen den Seitenwänden (3) und der Aussenseite der Eckverbindungsschiene (5) der Übergang bündig ist (Fig. 7, 10).

9. Kasten nach mindestens einem der Ansprüche 1-8, dadurch gekennzeichnet, dass die Seitenwände (3) und der Boden (2) aus einem einzigen Blechstück besteht (Fig. 2).

10. Kasten nach mindestens einem der vorhergehenden Ansprüche, dadurch gekennzeichnet, dass die Eckverbindungsschienen (5) je zwei abgewinkelte Nuten (8) zur Aufnahme der Seitenwände (3) aufweisen, die Aussenfläche (20) der Eckverbindungsschienen (5) gerundet ist und ihr Kopfstück (40) eine viertelskreisförmige Begrenzungsfläche hat.

11. Eckverbindungsschiene für einen Kasten nach Anspruch 10, dadurch gekennzeichnet, dass sie in Längsrichtung zweiteilig ausgebildet ist, die Trennlinie durch die Längsnuten (8) verläuft, das äussere Teilstück (7) eine viertelskreisförmige Begrenzungsfläche (20) hat und die lösbare Verbindung der beiden Schienenteile (6, 7) durch mindestens eine mittig angeordnete Schraube (10) erfolgt und das Kopfstück (40) am äussern Schienenteil (7) befestigt ist (Fig. 4, 7).

## Claims

1. Box having a bottom (2) and a plurality of side walls (3), and with corner connecting rails (5) which extend at the corners and along the side walls (3) which they fix in their position, the side walls (3) comprising bent-over edge parts (13) which engage in longitudinal grooves (8) in the corner connecting rails (5), the corner connecting rails (5) extending on the inside and outside of the box, characterised in that the side walls (3) are of U-shaped construction at their end portion (4) which is remote from the bottom (2) so that a channel (57) is formed which is open towards the interior of the box, the end portions (14) which are on the inside of the box abutting or virtually abutting at the corners (17), the corner connecting rails (5) having a head part (40) which covers over the longitudinal grooves (8).

2. Box according to claim 1, characterised in that the side walls (3) each run flush with the outside surface (20) of the associated corner connecting rails (5).

3. Box according to claim 1 or 2, characterised in that the longitudinal grooves (8) of the corner connecting rails (5) are undercut or have at their end a bore (9) which is larger than the longitudinal grooves (8) (Figs. 4, 6, 10).

4. Box according to one of claims 1 to 3, characterised in that the ends of the two longitudinal grooves (8) of the corner connecting rails (5) form with each other an angle of at least 90° while the zone of the corner connecting rail (5) which extends parallel with the side wall (3) is set back by the thickness of the sheet metal (Figs. 4 to 6).

5. Box according to claim 4, characterised in that each of the two longitudinal grooves (8) is of angled cross-section, the edge parts (13) having a Z-shaped cross-section (Figs. 5, 7).

6. Box according to at least one of claims 1 to 5, characterised in that the corner connecting rails (5) are constructed in one piece together with the headpiece (40) and preferably consist of synthetic plastics material (Figs. 9, 10).

7. Box according to at least one of claims 1 to 5, characterised in that the corner connecting rails (5) are in a longitudinal direction of two-part construction, the dividing line (18) extending through both longitudinal grooves (8), screws (10, 12) being provided by which the two rail parts (6, 7) can be separably connected to each other, the two rail parts (6, 7) of the corner connecting rails (5) engaging each other in a tongue-and-groove fashion (Fig. 7).

8. Box according to at least one of claims 1, 6 or 7, characterised in that the edge parts (13) each comprise a first lug part (35) bent over through 30° to 50° and preferably about 45°, and adjacent thereto a second bent-over lug part (37) extending substantially parallel with the associated side wall (3), the grooves (8) opening out at the corners of the corner connecting rails (5), the transition between the side walls (3) and the outside of the corner connecting rail (5) being flush (Fig. 7, 10).

9. Box according to at least one of claims 1 to 8, characterised in that the side walls (3) and the bottom (2) consist of a single piece of sheet metal (Fig. 2).

10. Box according to at least one of the preceding claims, characterised in that the corner connecting rails (5) each have two angled-over grooves (8) to accommodate the side walls (3), and in that the outside surface (20) of the corner connecting rails (5) is rounded and in that the head piece (40) has a quadrant-shaped defining surface.

11. Corner connecting rail for a box according to claim 10, characterised in that in a longitudinal direction it is constructed in two parts, the dividing line extending through the longitudinal grooves (8), the outer portion (7) having a quadrant-shaped defining surface (20) while the separable connection of the two rail parts (6, 7) is achieved by at least one centrally disposed screw (10), the head piece (40) being mounted on the outer rail part (7) (Fig. 4, 7).

**Revendications**

1. Armoire comportant un fond (2) et plusieurs parois latérales (3) ainsi que des rails de liaison d'angle (5) qui s'étendent aux angles le long des parois latérales (3) et fixent celles-ci dans leur position, les parois latérales (3) contenant des éléments de bordure (13) repliés qui pénètrent dans des rainures longitudinales (8) des rails de liaison d'angle (5), ces rails de liaison d'angle (5) s'étendant sur la face intérieure et la face extérieure de l'armoire, caractérisée en ce que les parois latérales (3) ont une forme en U dans leur zone d'extrémité (4) opposée au fond (2), de sorte qu'il est formé une goulotte (57), s'ouvrant vers l'intérieur de l'armoire, les zones d'extrémité (14) côté intérieur de l'armoire se rejoignant totalement ou approximativement aux angles (17) et les rails de liaison d'angle (5) présentant un embout (40) recouvrant les rainures longitudinales (8).

2. Armoire selon la revendication 1, caractérisée en ce que les parois latérales (3) affleurent la face extérieure (20) des rails de liaison d'angle (5) associés.

3. Armoire selon la revendication 1 ou 2, caractérisée en ce que les rainures longitudinales (8) des rails de liaison d'angle (5) sont détalonnés ou présentent à leur extrémité un perçage (9) assez grand par rapport aux rainures longitudinales (8) (figures 4, 6, 10).

4. Armoire selon l'une des revendications 1 à 3, caractérisée en ce que les extrémités des deux rainures longitudinales (8) des rails de liaison d'angle (5) forment entre elles un angle d'au moins 90° et en ce que la zone parallèle à la parois latérales (3) est en retrait de l'épaisseur de la tôle par rapport aux rails de liaison d'angle (5) (figures 4-6).

5. Armoire selon la revendication 4, caractérisée en ce que chacune des rainures des deux rainures longitudinales (8) a une section transversale à angle droit, et en ce que les bordures (13) ont une section transversale en Z (figures 5, 7).

6. Armoire selon l'une au moins des revendications 1 à 5, caractérisée en ce que les rails de liaison d'angle (5) sont formés d'une pièce avec l'embout (40) et faits de préférence dans une matière plastique (figures 9, 10).

7. Armoire selon l'une des revendications 1 à 5, caractérisée en ce que les rails de liaison d'angle (5) sont constitués de deux parties dans la direction longitudinale, la ligne de séparation (18) traversant les deux rainures longitudinales (8), en ce que des vis (10, 12) permettent d'assembler de manière amovible les deux parties de rails (6, 7) et en ce que les deux parties de rails (6, 7) des rails de liaison d'angle (5) s'assemblent l'une dans l'autre comme languette et rainure (figure 7).

8. Armoire selon l'une au moins des revendications 1, 6 ou 7, caractérisée en ce que les bordures (13) présentent chacune une première partie de patte (35) repliée entre 30 et 50°, de préférence à 45°, et une deuxième partie de patte (37) jointive, repliée, approximativement parallèle à la paroi latérale (3) associée, et en ce que les rainures (8) aboutissent aux angles des rails de liaison d'angle (5), la transition entre les parois latérales (3) et la face extérieure des rails de liaison d'angle (5) se faisant par affleurement (figures 7, 10).

9. Armoire selon l'une au moins des revendications 1 à 8, caractérisée en ce que les parois latérales (3) et le fond (2) sont constitués d'une seule pièce de tôle (figure 2).

10. Armoire selon l'une au moins des revendications 1 à 9, caractérisée en ce que les rails de liaison d'angle (5) présentent chacun des rainures (8) coudées destinées à recevoir les parois latérales (3), la surface extérieure (20) des rails de liaison d'angle (5) étant arrondie et leur embout (40) présentant une surface de limitation en forme de quart de cercle.

11. Rail de liaison d'angle pour une armoire selon la revendication 10, caractérisée en ce qu'il est partagé en deux longitudinalement, en ce que la ligne de séparation passe par les rainures longitudinales (8), en ce que l'élément extérieur (7) présente une surface de limitation (20) en forme de quart de cercle et en ce que lassemblage amovible des deux parties de rails (6, 7) s'effectue à l'aide d'au moins une vis (10) disposée au milieu, et en ce que l'embout (40) est fixé sur la partie de rail (7) extérieure (figures 4, 7).

0 133 605

Fig. 1

Fig. 2

Fig. 3

Fig. 4

0 133 605

Fig. 5

Fig. 6

Fig. 7

13

Fig. 8

Fig. 9

Fig. 10